# EUROPEAN PATENT APPLICATION

(11) **EP 3 220 342 A1**
(43) Date of publication of application: **20.09.2017**
(21) Application number: 14905771.3
(22) Date of filing: 14.11.2014
(51) Int. Cl.: G06Q 50/14, G06Q 10/00

(54) **ITINERARY DETERMINATION METHOD, ITINERARY DETERMINATION PROGRAM AND ITINERARY DETERMINATION DEVICE**

(71) Applicant: Fujitsu Limited, Kawasaki-shi, Kanagawa 211-8588 (JP)
(72) Inventor: MAITA, Tsuyoshi, Kanagawa 211-8588 (JP); NORO, Nobumi, Kanagawa 211-8588 (JP); SATO, Yoichi, Aomori-shi Aomori 030-0823 (JP); KUJI, Yasunori, Aomori-shi Aomori 030-0823 (JP)
(74) Representative: Hoffmann Eitle
(86) International application number: PCT/JP2014/080274
(87) International publication number: WO 2016/075835

(57) **Abstract**

An itinerary comparing apparatus receives a designation of a plurality of sightseeing spots from a user or the like. After that, the itinerary comparing apparatus refers to an itinerary storage unit storing therein a plurality of pieces of travel package product information. Subsequently, the itinerary comparing apparatus extracts a piece of travel package product information including the plurality of sightseeing spots received from the user or the like as destinations, by referring to the itinerary storage unit. After that, the itinerary comparing apparatus presents the piece of travel package product information extracted from among the plurality of pieces of travel package product information stored in the itinerary storage unit, to the user or the like.

## Description

### [Technical Field]

The present invention is related to an itinerary determining method, an itinerary determining computer program, and an itinerary determining apparatus.

### [Background Art]

Conventionally, a regular method for planning a trip has been going to a travel agent and determining a travel plan by consulting with staff at the storefront. In recent years, however, some people select travel plans by using web services offered by travel agents and the like.

For example, a user accesses a webpage in a travel system offered by a travel agent or the like, by using a terminal such as a mobile phone or a personal computer. Subsequently, by using the terminal, the user inputs, to the accessed webpage, information such as the travel dates/time, the number of days of the travel, the number of people traveling, the travel destination, the means of transportation, an upper limit for the cost, and the like.

Further, on the basis of the input information, the travel system selects an optimal travel plan product from among travel plan products offered by the company owning the system and causes the selected travel plan product to be displayed on the webpage accessed by the user. In this manner, the travel agent provides the travel plan product suitable for the travel plan desired by the user, selected from among the travel plan products.

### [Citation List]

### [Patent Literature]

Patent Literature 1: Japanese Laid-open Patent Publication No. 2014-115778
Patent Literature 2: Japanese Laid-open Patent Publication No. 2002-83186
Patent Literature 3: Japanese Laid-open Patent Publication No. 2010-3158
Patent Literature 4: Japanese Laid-open Patent Publication No. 2006-268793

### [Summary of invention]

### [Technical Problem]

Even when the abovementioned technique is used, however, because the travel agent provides the travel plan product selected from among the travel plan products offered thereby, the travel agent may not be able, in some situations, to provide a travel plan product that matches the travel plan desired by the user.

For example, while the user has made a travel plan to visit a sightseeing spot A, a sightseeing spot B, and a sightseeing spot C, the travel agent may have only such travel plan products in which the traveler is scheduled to visit the sightseeing spot A and the sightseeing spot B. In that situation, because the travel agent provides the travel plan products to visit the sightseeing spot A and the sightseeing spot B, the travel agent is not able to provide a travel plan product that meets the desire of the user.

In that situation, it is also possible for the user to go to the storefront and ask staff to create a desirable travel plan. However, because this method takes trouble and time, this method is not considered to be a preferable method.

According to an aspect, it is an object of the present invention to provide an itinerary determining method, an itinerary determining computer program, and an itinerary determining apparatus that are able to provide a travel plan that meets the desire of the user.

### [Solution to Problem]

According to an aspect of an itinerary determining method includes: receiving a designation of a plurality of sightseeing spots; extracting a piece of travel package product information including the received plurality of sightseeing spots as destinations, by referring to an itinerary storage unit storing therein a plurality of pieces of travel package product information; and presenting the extracted piece of travel package product information.

### [Advantageous Effects of Invention]

According to an embodiment, it is possible to provide the travel plan that meets the desire of the user.

### [Brief Description of Drawings]

FIG. 1 is a drawing illustrating an exemplary overall configuration of a system according to a first embodiment.
FIG. 2 is a functional block diagram illustrating a functional configuration of an itinerary comparing apparatus according to the first embodiment.
FIG. 3 is a drawing illustrating a user preference plan received from a user.
FIG. 4 is a drawing illustrating an example of proposed travel plans.
FIG. 5 is a flowchart illustrating a flow in a process performed by the itinerary comparing apparatus.
FIG. 6 is a drawing for explaining a first example of proposed travel plans.
FIG. 7 is a drawing for explaining a second example of proposed travel plans.
FIG. 8 is a drawing for explaining a third example of proposed travel plans.
FIG. 9 is a drawing for explaining a fourth example of proposed travel plans.
FIG. 10 is a drawing for explaining a fifth example of proposed travel plans.
FIG. 11 is a diagram for explaining an exemplary hardware configuration.

### [Description of Embodiments]

Embodiments of an itinerary determining method, an itinerary determining computer program, and an itinerary determining apparatus of the present invention will be explained in detail below, with reference to the drawings. The present invention is not limited by these embodiments. Further, it is acceptable to combine any of the embodiments together as appropriate, so long as no conflict occurs.

### First Embodiment

### An overall configuration

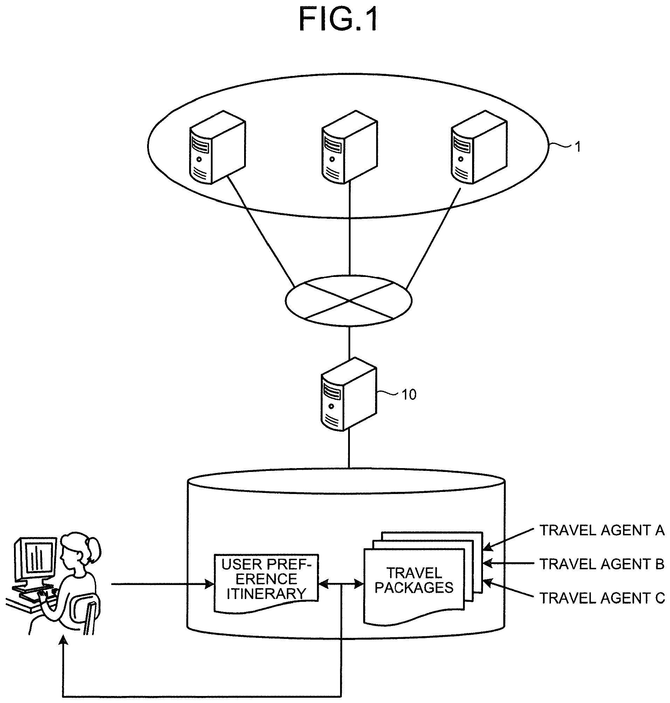

FIG. 1 is a drawing illustrating an exemplary overall configuration of a system according to a first embodiment. As illustrated in FIG. 1, the system includes a group of various types of servers 1 and an itinerary comparing apparatus 10, which are connected so as to be able to communicate with each other via a network such as the Internet. The itinerary comparing apparatus 10 is an example of an itinerary determining apparatus.

The group of servers 1 includes various types of servers such as a position identifying server, a route searching server, and the like. For example, the position identifying server is a server that identifies position information (a latitude and a longitude) from the name of a facility, a train station, or the like. The route searching server is a server that receives an input of position information and/or a facility name as a starting location and a final destination and that calculates route information about a route from the starting location to the final destination, or the like.

For example, the route searching server calculates the route information and a required time period from the starting location to the final destination, by using the position information of the starting location and the position information of the final destination identified by the position identifying server. In this situation, the route searching server calculates the route information and the required time period for each of various means of transportation such as a train, an airplane, on foot (walking), and a car.

The itinerary comparing apparatus 10 stores therein travel package product information indicating travel plans to be provided for a user that are acquired by crawling webpages of travel agents. In the present example, the itinerary comparing apparatus 10 stores therein pieces of travel package product information provided by a travel agent A, a travel agent B, and a travel agent C.

In this situation, the itinerary comparing apparatus 10 receives a designation of a plurality of sightseeing spots and further extracts one or more pieces of travel package product information each including the received plurality of sightseeing spots as destinations, by referring to a storage unit storing therein a plurality of pieces of travel package product information. After that, the itinerary comparing apparatus 10 presents the one or more extracted pieces of travel package product information.

For example, the itinerary comparing apparatus 10 displays a webpage on a user terminal from which an access has been made and receives, on the webpage, a user preference itinerary designating a plurality of sightseeing spots, the travel dates/time, the number of nights, primary transportation, and the like. After that, the itinerary comparing apparatus 10 compares the received user preference itinerary with the pieces of travel package product information offered by the travel agents and further generates advantages and disadvantages of changing the user preference itinerary to each of the pieces of travel package product information.

After that, the itinerary comparing apparatus 10 causes a comparison result to be displayed on a webpage browsed on the user terminal, the comparison result including the advantages and the disadvantages of the pieces of travel package product information. In this manner, the itinerary comparing apparatus 10 is able to provide a travel plan that meets the desire of the user.

### A functional configuration

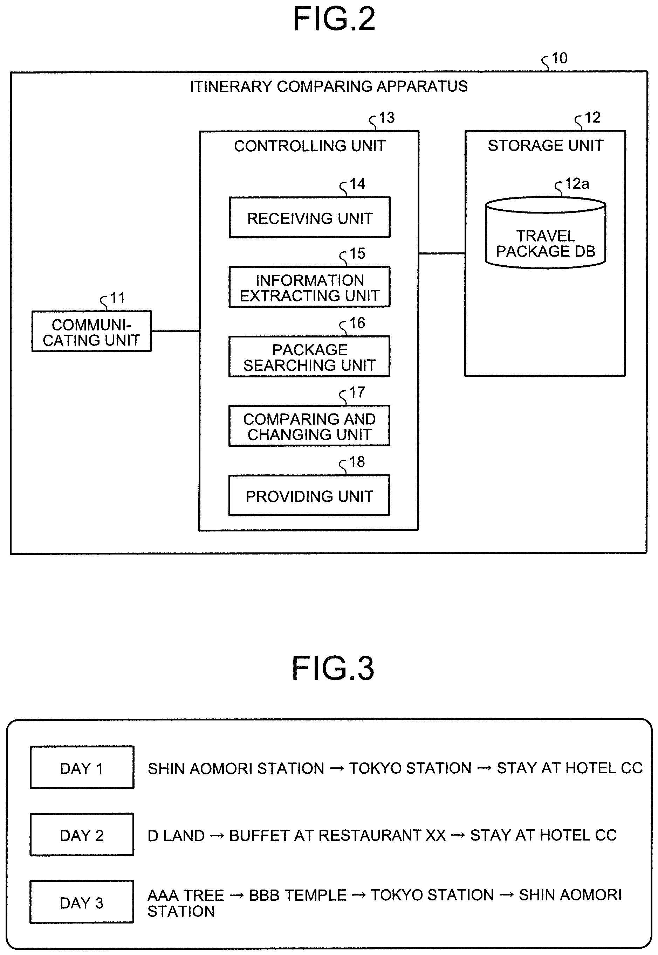

FIG. 2 is a functional block diagram illustrating a functional configuration of an itinerary comparing apparatus according to the first embodiment. As illustrated in FIG. 2, the itinerary comparing apparatus 10 includes a communicating unit 11, a storage unit 12, and a controlling unit 13.

The communicating unit 11 is a processing unit that controls communication of other apparatuses and, for example, may be configured by using a network interface card. For example, the communicating unit 11 transmits and receives data to and from any of the servers included in the group of servers 1 and also performs communication with the user terminal through a web browser.

The storage unit 12 is a storage device storing therein computer programs executed by the controlling unit 13 and a travel package database (DB) 12a. For example, the storage unit 12 may be configured by using a memory or a hard disk. The travel package DB 12a is a database storing therein the pieces of travel package product information acquired from the travel agents. In this situation, examples of the pieces of travel package product information are pieces of information related to travel packages that are searchable through web browsers. The travel package DB 12a is an example of an itinerary storage unit.

The pieces of travel package product information are pieces of information that have already been determined by the travel agents and each include information such as travel dates, a starting location, a final destination, a cost, a tour guide, primary transportation, transportation facilities, names, positions, and entrance fees of sightseeing spots to be visited, names, positions, and entrance fees of restaurants to be visited, a validity time period of the package, a meal cost, and/or the like.

The controlling unit 13 is a processing unit that controls processes in the entire itinerary comparing apparatus 10 and may be configured by using, for example, a processor or the like. The controlling unit 13 includes a receiving unit 14, an information extracting unit 15, a package searching unit 16, a comparing and changing unit 17, and a providing unit 18. The receiving unit 14, the information extracting unit 15, the package searching unit 16, the comparing and changing unit 17, and the providing unit 18 are examples of processes executed by a part of an electronic circuit or one or more processors.

The receiving unit 14 is a processing unit that receives the user preference itinerary, which is a travel plan of the user himself/herself, from the user terminal. More specifically, the receiving unit 14 receives the travel plan desired by the user via a web browser or the like and further stores the received travel plan into the storage unit 12 or the like. The receiving unit 14 may also receive a budget and the like, as appropriate.

FIG. 3 is a drawing illustrating an example of the user preference plan received from the user. As illustrated in FIG. 3, the receiving unit 14 receives the user preference itinerary indicating a traveling schedule to sightseeing spots and the like, for each of the travel dates. In the example illustrated in FIG. 3, on Day 1, the traveler is scheduled to travel from Shin Aomori Station to Tokyo Station and to subsequently stay at Hotel CC. On Day 2, the traveler is scheduled to play at D Land, to have a buffet meal at Restaurant XX and to stay at Hotel CC. On Day 3, the traveler is scheduled to visit AAA Tree and BBB Temple and to subsequently leave from Tokyo Station to return to Shin Aomori Station.

The information extracting unit 15 is a processing unit that extracts information about transportation information, traveling time periods, costs, and the like from the user preference itinerary received by the receiving unit 14. More specifically, the information extracting unit 15 extracts the sightseeing spots, the starting location, the final destination, and the like and performs a process by transmitting the extracted information to the position identifying server and the route searching server, so as to extract the information about the transportation information, the traveling time periods, the costs, and the like.

To explain the process by using the above example, the information extracting unit 15 identifies D Land, AAA Tree, and BBB Temple as the sightseeing spots, identifies Shin Aomori Station as the starting location, identifies Tokyo Station as the final destination, identifies the accommodation facility as Hotel CC, and identifies the number of days of the travel as two nights and three days. The information extracting unit 15 may store therein a list of sightseeing spots, starting locations, and the like so as to identify the locations by referring to the stored list. Alternatively, the receiving unit 14 may prompt the user to designate the locations when the travel information is received from the user.

After that, the information extracting unit 15 transmits pieces of information about the sightseeing spots, the starting location, the final destination, the accommodation facility, and the like that were identified, to a service provided by the position identifying server and obtains the position information of these pieces of information. Subsequently, with respect to Day 1, the information extracting unit 15 inputs the position information of Shin Aomori Station serving as the starting location, the position information of Tokyo Station serving as the final destination, and the position information of Hotel CC serving as the accommodation facility, to a service provided by the route searching server. After that, the information extracting unit 15 obtains, from the route searching server, a means of transportation, the traveling time period, and the cost for the traveling from Shin Aomori Station to Tokyo Station, as well as a means of transportation, the traveling time period, and the cost for the traveling from Tokyo Station to Hotel CC, and the like.

Similarly, with respect to Day 2, the information extracting unit 15 inputs the position information of Hotel CC serving as the accommodation facility, the position information of D Land, and the position information of Restaurant XX to the service provided by the route searching server. After that, the information extracting unit 15 obtains, from the route searching server, a means of transportation, the traveling time period, and the cost for the traveling from Hotel CC to D Land, as well as a means of transportation, the traveling time period, and the cost for the traveling from D Land to Restaurant XX, and a means of transportation, the traveling time period, and the cost for the traveling from Restaurant XX to Hotel CC, and the like.

Further, with respect to Day 3, the information extracting unit 15 inputs the position information of Hotel CC serving as the accommodation facility, the position information of AAA Tree, the position information of BBB Temple, the position information of Shin Aomori Station, and the position information of Tokyo Station to the service provided by the route searching server. After that, the information extracting unit 15 obtains, from the route searching server, a means of transportation, the traveling time period, and the cost for the traveling from Hotel CC to AAA Tree, as well as a means of transportation, the traveling time period, and the cost of the traveling from AAA Tree to BBB Temple, and the like. In addition, the information extracting unit 15 obtains, from the route searching server, a means of transportation, the traveling time period, and the cost for the traveling from BBB Temple to Tokyo station, as well as a means of transportation, the traveling time period, and the cost for the traveling from Tokyo Station to Shin Aomori Station, and the like.

In the manner described above, the information extracting unit 15 extracts the travel cost of the entire trip, the period of time taken by the entire trip, the traveling time period in the entire trip, and the traveling time period on foot, and the like, for the situation where the travel plan scheduled by the user himself/herself is realized.

The package searching unit 16 is a processing unit that searches in the travel package DB 12a for a piece of travel package product information to be compared with the user preference itinerary. More specifically, the package searching unit 16 identifies one or more pieces of travel package product information in which the starting location and the final destination are the same as those in the user preference itinerary, further identifies one or more pieces of travel package product information each including one or more designated priority items from among the identified pieces of travel package product information, and notifies the comparing and changing unit 17 of the result.

In this situation, the starting location and the final destination do not always have to be completely the same and may be locations in the same geographical zone. For instance, with the example in which the starting location is Shin Aomori Station, pieces of travel package product information each including any one selected from among Shin Aomori Station, Aomori Prefecture, and Aomori Airport and the like may be considered to correspond.

Further, the priority items may be designated by the user or may be set by the itinerary comparing apparatus 10 in advance. Further, it is also possible to set two or more priority items. For example, when a priority item is determined to be sightseeing spots, the package searching unit 16 identifies one or more pieces of travel package product information each including all of D Land, AAA Tree, and BBB Temple. In another example, when priority items are determined to be sightseeing spots and accommodation facilities, the package searching unit 16 identifies one or more travel package product information each including all of D Land, AAA Tree, BBB Temple, and Hotel CC.

In this situation, it is possible to arbitrarily change conditions for the priority items. For example, it is also possible to designate that at least two of the plurality of sightseeing spots are to be included in the itinerary. In that situation, the package searching unit 16 identifies one or more pieces of travel package product information each including at least two selected from among D Land, AAA Tree, and BBB Temple. Further, when no piece of travel package product information corresponding to the one or more priority items is found in the search, the package searching unit 16 is also able to search for a corresponding piece of travel package product information by automatically setting the abovementioned condition or the like.

The comparing and changing unit 17 is a processing unit that compares the user preference itinerary received by the receiving unit 14 with the one or more pieces of travel package product information found in the search by the package searching unit 16 and that generates one or more advantages and disadvantages of the situation where the user preference itinerary is changed to each of the one or more pieces of travel package product information.

More specifically, the comparing and changing unit 17 compares the traveling time period, the cost, and the traveling time period on foot of the user preference itinerary with the traveling time period, the cost, and the traveling time period on foot of the piece of travel package product information similar to the user preference itinerary. After that, the comparing and changing unit 17 extracts information indicating that the traveling time period is shorter or that the time spent at the sightseeing spots is longer as an advantage. In addition, the comparing and changing unit 17 extracts information indicating that the traveling time period is longer, that the traveling time period on foot is longer, or that the cost is higher as a disadvantage. Other examples of advantages and disadvantages include comparisons about the starting date/time, the returning date/time, the validity time period of the package or the tour, and the minimum number of participants.

Further, by comparing the user preference itinerary with the piece of travel package product information, the comparing and changing unit 17 is also able to generate a new piece of travel package product information by replacing a part of the piece of travel package product information with one or more different items and to also generate advantages and disadvantages of the new piece of travel package product information. In other words, on the basis of the user preference itinerary and the piece of travel package product information similar to the user preference itinerary, the comparing and changing unit 17 performs a process of removing and/or reconfiguring the items and the like, so as to obtain an itinerary that meets the desire of the user.

For example, let us discuss a situation where a compared piece of travel package product information in which the starting location, the final destination, and the accommodation facility are the same as those in the user preference itinerary does not include any of the sightseeing spots included in the user preference itinerary but includes free time. In that situation, the comparing and changing unit 17 generates a piece of travel package product information by arranging all the sightseeing spots included in the user preference itinerary to be visited during the free time of the compared piece of travel package product information. After that, the comparing and changing unit 17 compares the user preference itinerary with the new piece of travel package product information and generates information indicating that a disadvantage is the time spent at the sightseeing spots being shorter and that an advantage is the cost being lower, and the like.

In another example, when the compared piece of travel package product information includes two out of the three sightseeing spots included in the user preference itinerary, the comparing and changing unit 17 identifies other sightseeing spots and free time included in the compared piece of travel package product information. After that, the comparing and changing unit 17 generates a new piece of travel package product information by replacing one of the other identified sightseeing spots or the free time with the one sightseeing spot that is not included (hereinafter, the "remaining sightseeing spot"). Subsequently, the comparing and changing unit 17 further compares the user preference itinerary with the new piece of travel package product information and generates information about disadvantages and advantages.

In addition, the comparing and changing unit 17 is also capable of calculating spare time at each of the other identified sightseeing spots, by using items such as train stations set before and after each sightseeing spot, the position identifying server, and the route searching server. For example, the comparing and changing unit 17 is also capable to calculating a predetermined time period to travel from a preceding sightseeing spot to a following sightseeing spot by using the position identifying server and the route searching server so as to regard the calculated time period as spare time.

After that, the comparing and changing unit 17 judges whether or not incorporating the remaining sightseeing spot in either the spare time or the free time will have an impact on other parts of the schedule, e.g., make the traveler miss a train or make it impossible to arrive at an already-scheduled sightseeing spot during the business hours thereof. In other words, the comparing and changing unit 17 judges whether or not the traveler is able to visit the sightseeing spot in the spare time. After that, when determining that no impact is made on the other parts of the schedule, the comparing and changing unit 17 generates the new piece of travel package product information by having the remaining sightseeing spot incorporated therein.

For example, the comparing and changing unit 17 calculates a first traveling time period for the traveling from an item preceding the incorporation position to the incorporated sightseeing spot and also calculates a second traveling time period for the traveling from the incorporated sightseeing spot to an item subsequent to the incorporation position. After that, when the difference between the second traveling time period and the first traveling time period is equal to or longer than a predetermined length of time (e.g., two hours), the comparing and changing unit 17 determines that it is possible to incorporate the sightseeing spot. The predetermined time period in this situation may arbitrarily be set depending on what sightseeing spot is to be incorporated. For example, it is possible to set a time period that is expected to be taken by the visit to the incorporated facility or the like, such as three hours for a zoo or an art museum, and one hour for a shopping mall, or the like.

Even when an impact will be made on the other parts of the schedule, the comparing and changing unit 17 is able to generate a new piece of travel package product information by incorporating the remaining sightseeing spot therein, when it is possible to adjust the prescribed schedule, e.g., when the traveler will be able to keep the rest of the schedule even if he/she takes a later train or when the already-scheduled sightseeing spot has leeway in the business hours thereof.

When the compared piece of travel package product information includes all the sightseeing spots included in the user preference itinerary and also includes free time, the comparing and changing unit 17 is also capable of generating a piece of travel package product information by arranging another sightseeing spot to be visited during the free time. For example, the comparing and changing unit 17 may store therein sightseeing spots at the final destination in the order of popularity and may incorporate, into the free time, the most popular sightseeing spot among the sightseeing spots that are not included in either the user preference itinerary or the compared piece of travel package product information, as a new location to visit. When there are two or more free time periods, the comparing and changing unit 17 is also capable of incorporating new locations to visit with an arbitrary number of sightseeing spots.

The providing unit 18 is a processing unit that provides the user with a result of the comparison made by the comparing and changing unit 17, as well as the new piece of travel package product information generated by the comparing and changing unit 17 and the user preference itinerary in a comparable manner. More specifically, the providing unit 18 provides the user terminal with a webpage displaying information about the user preference itinerary, the piece of travel package product information compared with the user preference itinerary, the advantages and the disadvantages presented as the result of the comparison, and information incorporated in the piece of travel package product information.

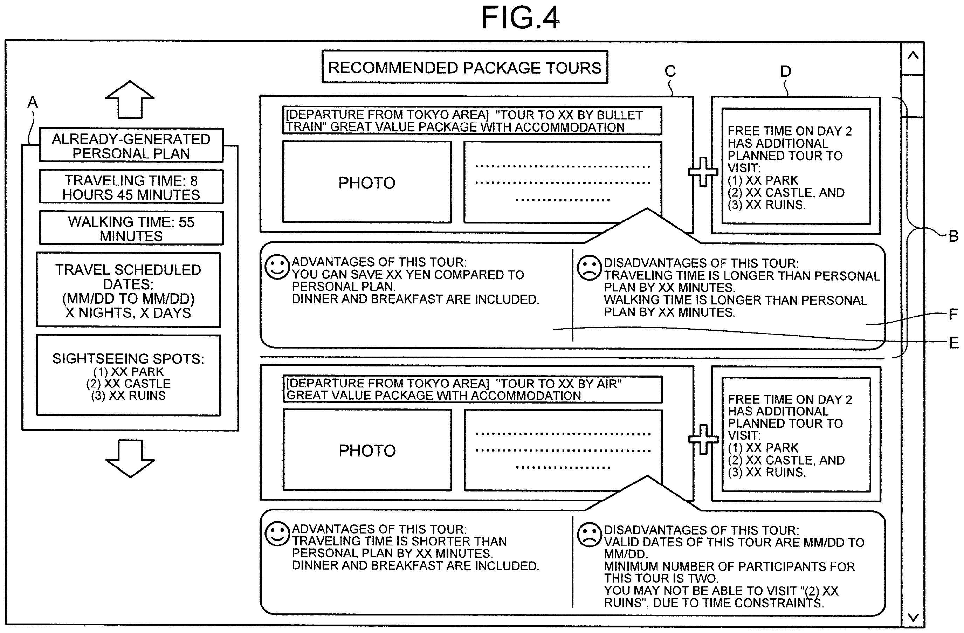

FIG. 4 is a drawing illustrating an example of proposed travel plans. The providing unit 18 provides the user terminal with the proposal screen illustrated in FIG. 4 and prompts the viewer to review a travel plan that meets his/her desire. As illustrated in FIG. 4, in a region A on the proposal screen, details of an already-generated "Personal Plan" are displayed. More specifically, information about the user preference itinerary received by the receiving unit 14 is displayed. In this situation, the region A is displayed in a fixed manner so that the information therein keeps being displayed even when the entire screen is scrolled.

In a region B on the proposal screen, a piece of travel package product information to be compared with the user preference itinerary is displayed. In other words, the piece of travel package product information to be proposed is displayed in the region B. The region B includes a plurality of sectional regions so that a comparison result is displayed in each of the sectional regions and so that the viewer is able to browse the information by scrolling the screen.

In a region C within the region B on the proposal screen, the details of the piece of travel package product information identified as a compared piece of travel package product information are displayed. The piece of travel package product information displayed in this situation indicates a travel package generated by a travel agent, and no change or the like has been made thereto by the itinerary comparing apparatus 10. In other words, in the region C, the piece of travel package product information found in a search by the package searching unit 16 is displayed.

In a region D within the region B on the proposal screen, information to be incorporated into the compared piece of travel package product information is displayed. The displayed information indicates what types of schedule elements are incorporated into which parts of the schedule of the compared piece of travel package product information. In other words, in the region D, the information about the sightseeing spots and the like that are determined by the comparing and changing unit 17 to be incorporated or replaced with are displayed. When there is no information to be incorporated, nothing is displayed.

In a region E within the region B on the proposal screen, advantages are displayed with respect to the situation where the information displayed in the region D is incorporated into the compared piece of travel package product information. In other words, in the region E, the information generated by the comparing and changing unit 17 is displayed to indicate the advantages of the situation where the user preference itinerary is replaced with the proposed piece of travel package product information.

In a region F within the region B on the proposal screen, disadvantages are displayed with respect to the situation where the information displayed in the region D is incorporated into the compared piece of travel package product information. In other words, in the region F, the information generated by the comparing and changing unit 17 is displayed to indicate the disadvantages of the situation where the user preference itinerary is replaced with the proposed piece of travel package product information.

### A flow in the process

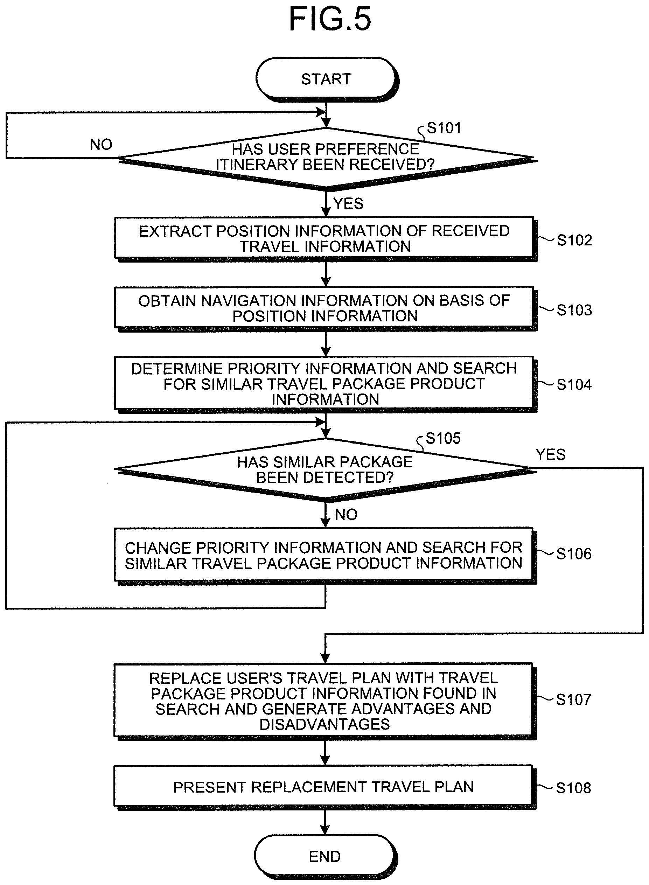

FIG. 5 is a flowchart illustrating a flow in a process performed by the itinerary comparing apparatus. As illustrated in FIG. 5, when the receiving unit 14 included in the itinerary comparing apparatus 10 has received a user preference itinerary (step S101: Yes), the information extracting unit 15 extracts pieces of position information of travel information from the received user preference itinerary (step S102). For example, the information extracting unit 15 extracts sightseeing spots, accommodation facilities, the starting location, the final destination, the travel dates, the number of nights requiring accommodation, and the like. After that, the information extracting unit 15 transmits the extracted pieces of information to the position identifying server or the like and extracts pieces of position information pertained to the extracted pieces of information.

In the first embodiment, the example is explained in which the search is conducted for a travel package product corresponding to the pieces of position information. However, it is also possible to conduct a search for a travel package product on the basis of the sightseeing spots themselves included in a user preference itinerary, personal tendency information of the user preference itinerary defined by the sightseeing spots, or season information defined by the travel dates.

For example, the information extracting unit 15 extracts keywords from the names of the sightseeing spots in the user preference itinerary. Examples of the keywords include "CC Tree", the name of a famous writer, "cherry blossoms", and the like. The information extracting unit 15 searches for a travel package product including extracted keywords. In another example, the information extracting unit 15 may identify the season on the basis of the travel dates and search for a travel package product corresponding to the identified season. The information extracting unit 15 is capable of conducting a search by using these conditions as AND conditions or as OR conditions.

Subsequently, the information extracting unit 15 obtains navigation information on the basis of the extracted pieces of position information (step S103). For example, the information extracting unit 15 transmits the extracted pieces of position information to the route searching server and obtains transportation information including the primary transportation from the starting location to the final destination and the means of transportation and the traveling time periods between the sightseeing spots, as well as the time to be spent at each of the sightseeing spots.

After that, the package searching unit 16 determines priority information and searches for travel package product information similar to the received user preference itinerary (step S104). For example, the package searching unit 16 searches in the travel package DB 12a for pieces of travel package product information in which the starting location and the final destination are the same as those in the user preference itinerary and further searches in the pieces of travel package product information found in the search for one or more pieces of travel package product information each including all the sightseeing spots in the user preference itinerary.

After that, when no similar piece of travel package product information is detected (step S105: No), the package searching unit 16 searches for travel package product information after changing the designated priority information (step S106). For example, the package searching unit 16 conducts a search again for travel package product information after changing the priority condition from "an itinerary including all the sightseeing spots in the user preference itinerary" to "an itinerary including any one of the sightseeing spots in the user preference itinerary" or "an itinerary in which the primary transportation is the same as that in the user preference itinerary".

After that, when the package searching unit 16 has detected a similar piece of travel package product information (step S105: Yes), the comparing and changing unit 17 replaces the user preference itinerary received from the user with the piece of travel package product information found in the search and further generates information indicating advantages and disadvantages (step S107). In other words, the comparing and changing unit 17 performs the abovementioned process of replacing one or more of the sightseeing spots and/or changing the activities during the free time on the similar piece of travel package product information and further generates the information indicating the advantages and the disadvantages obtained by comparing the post-change travel package product information with the user preference itinerary.

After that, the providing unit 18 presents a comparison result to the user (step S108). For example, the providing unit 18 transmits the screen illustrated in FIG. 4 to the user terminal.

### Specific examples

Next, specific examples will be explained in which the itinerary comparing apparatus 10 configured as above compares pieces of travel package product information and makes a proposal to the user.

### An itinerary that matches the user preference itinerary

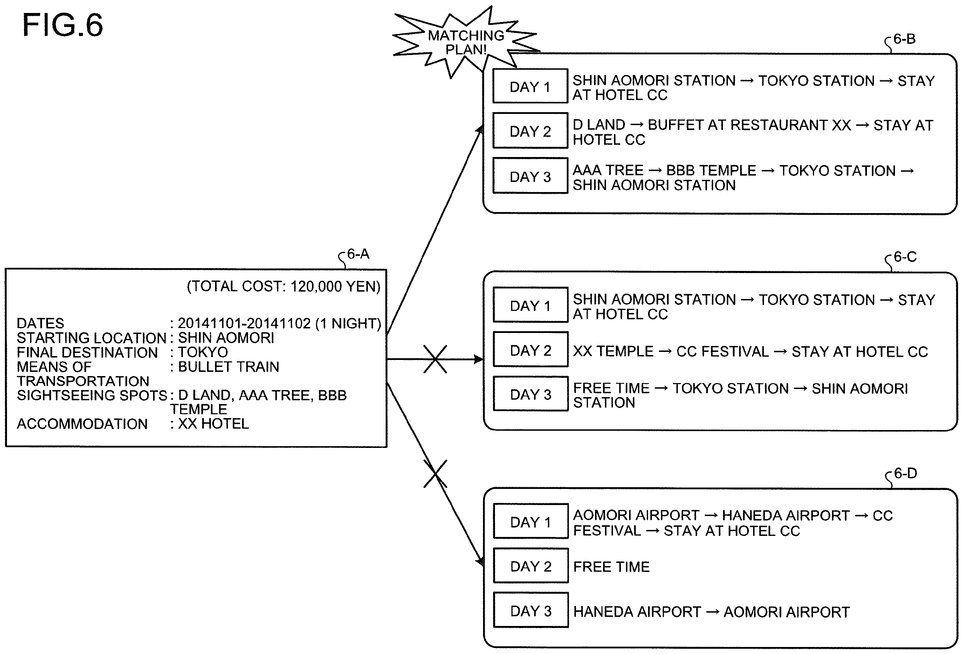

First, an example will be explained in which a piece of travel package product information that matches the user preference itinerary is proposed. FIG. 6 is a drawing for explaining a first example of proposed travel plans. As illustrated in FIG. 6, the itinerary comparing apparatus 10 receives, as a user preference itinerary of which the total cost is 120,000 Yen, "Travel dates: 20141101-20141102 (one night); Starting location: Shin Aomori; Final destination: Tokyo; Means of transportation: the bullet train (Shinkansen); Sightseeing spots: D Land, AAA Tree, and BBB Temple; Accommodation facility: XX Hotel" (see 6-A in FIG. 6).

After that, the itinerary comparing apparatus 10 searches for travel package product information by determining the priority information to be "the starting location and the final destination" and detects three pieces of travel package product information, namely, 6-B, 6-C, and 6-D illustrated in FIG. 6.

From among these three, because the piece of travel package product information identified as 6-B includes all the sightseeing spots in the user preference itinerary, i.e., "D Land, AAA Tree, and BBB Temple", the itinerary comparing apparatus 10 proposes the piece of travel package product information identified as 6-B to the user as a matching travel plan. Further, in the piece of travel package product information identified as 6-B, because the accommodation facility is changed from XX Hotel in the user preference itinerary to Hotel CC, the cost will increase. As a result, the itinerary comparing apparatus 10 may also generate, as a disadvantage, information indicating that "the cost is higher". Similarly, the itinerary comparing apparatus 10 may also generate, as an advantage, information indicating that "a buffet meal can be enjoyed at the high-end restaurant".

In this situation, because the pieces of travel package product information identified as 6-C and 6-D include none of the sightseeing spots in the user preference itinerary, i.e., "D Land, AAA Tree, and BBB Temple", the itinerary comparing apparatus 10 may exclude these from proposal candidates.

### Proposing advantages and disadvantages

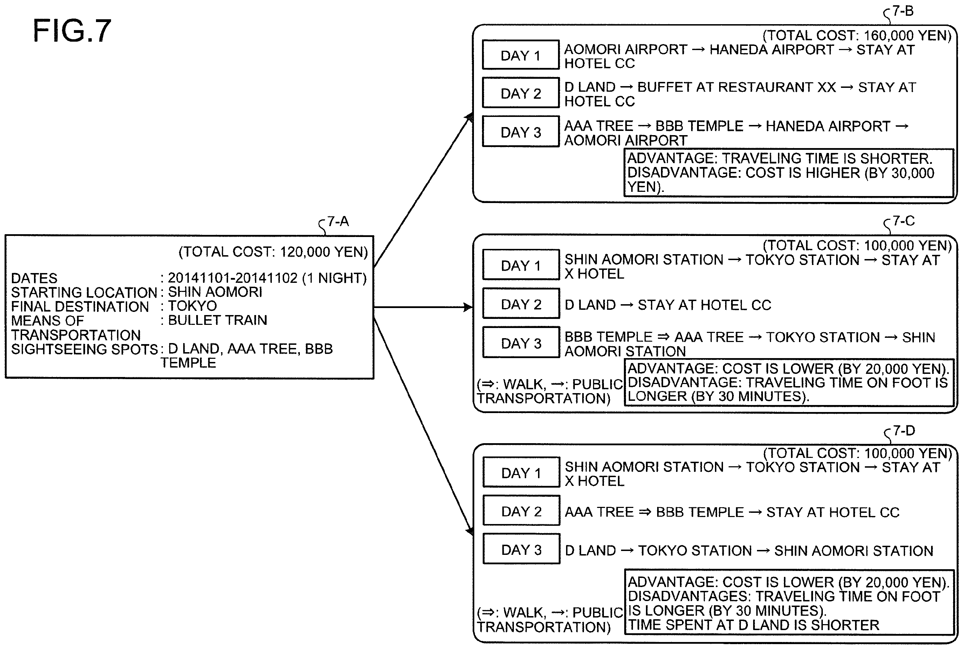

Next, an example will be explained in which advantages and disadvantages are proposed by comparing the user preference itinerary with travel package product information. FIG. 7 is a drawing for explaining a second example of proposed travel plans. As illustrated in FIG. 7, the itinerary comparing apparatus 10 receives, as a user preference itinerary of which the total cost is 120,000 Yen, "Travel dates: 20141101-20141102 (one night); Starting location: Shin Aomori; Final destination: Tokyo; Means of transportation: the bullet train; Sightseeing spots: D Land, AAA Tree, and BBB Temple" (see 7-A in FIG. 7).

After that, the itinerary comparing apparatus 10 searches for travel package product information by determining the priority information to be "the starting location, the final destination, and the sightseeing spots" and detects three pieces of travel package product information, namely, 7-B, 7-C, and 7-D illustrated in FIG. 7.

The piece of travel package product information identified as 7-B represents a travel plan of which the total cost is 160,000 Yen. On Day 1, the traveler is scheduled to travel from Aomori Airport to Haneda Airport and to stay at Hotel CC. On Day 2, the traveler is scheduled to visit D Land, to subsequently have a buffet meal at Restaurant XX, and to stay at Hotel CC. On Day 3, the traveler is scheduled to visit AAA Tree and BBB Temple and to subsequently leave from Haneda Airport to return to Aomori Airport.

The itinerary comparing apparatus 10 compares the piece of travel package product information with the user preference itinerary and determines that, although it will be possible to visit all the desired sightseeing spots, the means of transportation is an airplane instead of the bullet train. As a result, the itinerary comparing apparatus 10 generates information indicating that "the traveling time period is shorter" as an advantage and information indicating that "the cost is higher (by 30,000 Yen)" as a disadvantage, of the situation where the user preference itinerary is replaced with the piece of travel package product information identified as 7-B. Further, the itinerary comparing apparatus 10 proposes the piece of travel package product information identified as 7-B and the advantage and the disadvantage to the user.

The piece of travel package product information identified as 7-C represents a travel plan of which the total cost is 100,000 Yen. On Day 1, the traveler is scheduled to travel from Shin Aomori Station to Tokyo Station and to stay at X Hotel. On Day 2, the traveler is scheduled to visit D Land and to subsequently stay at Hotel CC. On Day 3, the traveler is scheduled to visit BBB Temple and AAA Tree on foot and to subsequently leave from Tokyo Station to return to Shin Aomori Station.

The itinerary comparing apparatus 10 compares the piece of travel package product information with the user preference itinerary and determines that, although it will be possible to visit all the desired sightseeing spots, the traveling time period by train is shorter and the traveling time period on foot is longer. As a result, the itinerary comparing apparatus 10 generates information indicating that "the cost is lower (by 20,000 yen)" as an advantage and information indicating that "the traveling time on foot is longer (by 30 minutes)" as a disadvantage, of the situation where the user preference itinerary is replaced with the piece of travel package product information identified as 7-C. Further, the itinerary comparing apparatus 10 proposes the piece of travel package product information identified as 7-C and the advantage and the disadvantage to the user.

The piece of travel package product information identified as 7-D represents a travel plan of which the total cost is 100,000 Yen. On Day 1, the traveler is scheduled to travel from Shin Aomori Station to Tokyo Station and to stay at X Hotel. On Day 2, the traveler is scheduled to visit AAA Tree and BBB Temple on foot and to subsequently stay at Hotel CC. On Day 3, the traveler is scheduled to play at D Land and to subsequently leave from Tokyo Station to return to Shin Aomori Station.

The itinerary comparing apparatus 10 compares the piece of travel package product information with the user preference itinerary and determines that, although it will be possible to visit all the desired sightseeing spots, the traveling time period by train is shorter and the traveling time period on foot is longer, while the time spent at D Land is shorter. As a result, the itinerary comparing apparatus 10 generates information indicating that "the cost is lower (by 20,000 yen)" as an advantage and information indicating that "the traveling time on foot is longer (by 30 minutes), and the time spent at D Land is shorter" as disadvantages, of the situation where the user preference itinerary is replaced with the piece of travel package product information identified as 7-D. Further, the itinerary comparing apparatus 10 proposes the piece of travel package product information identified as 7-D and the advantage and the disadvantages to the user.

### Propose a change of a sightseeing spot to a travel agent

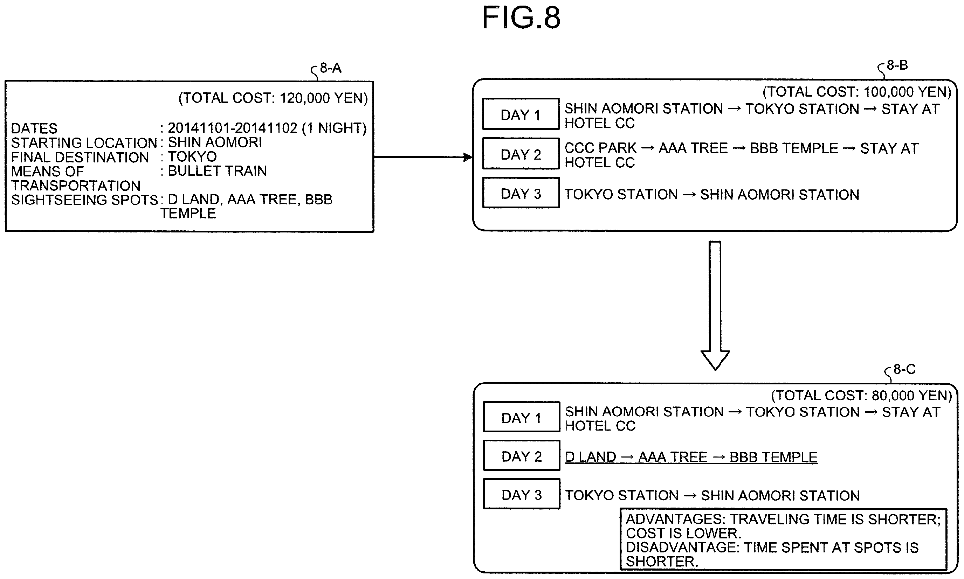

Next, an example will be explained in which advantages and disadvantages obtained by comparing the user preference itinerary with the travel package product information are proposed to the user, and also, changing a travel plan is proposed to a travel agent. FIG. 8 is a drawing for explaining a third example of proposed travel plans. As illustrated in FIG. 8, the itinerary comparing apparatus 10 receives, as a user preference itinerary of which the total cost is 120,000 Yen, "Travel dates: 20141101-20141102 (one night); Starting location: Shin Aomori; Final destination: Tokyo; Means of transportation: the bullet train; Sightseeing spots: D Land, AAA Tree, and BBB Temple" (see 8-A in FIG. 8).

After that, the itinerary comparing apparatus 10 searches for travel package product information by determining the priority information to be "an itinerary including the starting location, the final destination, and any one of the sightseeing spots" and detects the piece of travel package product information identified as 8-B in FIG. 8.

The piece of travel package product information identified as 8-B represents a travel plan of which the total cost is 100,000 Yen. On Day 1, the traveler is scheduled to travel from Shin Aomori Station to Tokyo Station and to stay at Hotel CC. On Day 2, the traveler is scheduled to visit CCC Park, AAA Tree, and BBB Temple and to subsequently stay at Hotel CC. On Day 3, the traveler is scheduled to leave from Tokyo Station to return to Shin Aomori Station.

The itinerary comparing apparatus 10 compares the piece of travel package product information with the user preference itinerary and determines that, when CCC Park on Day 2 is changed to D Land desired by the user, the itinerary will be similar to the travel plan desired by the user. Also, the itinerary comparing apparatus 10 determines that, in that situation, the traveler is able to visit all the desired sightseeing spots, that the traveling time period is shorter, and that the cost is lower, but the time spent at the sightseeing spots is shorter.

As a result, the itinerary comparing apparatus 10 generates a travel plan (8-C in FIG. 8) obtained by replacing CCC Park on Day 2 in the piece of travel package product information identified as 8-B with D Land. Further, the itinerary comparing apparatus 10 generates information indicating that "the traveling time period is shorter, and the cost is lower" as advantages and information indicating that "the time spent at the sightseeing spots is shorter" as a disadvantage, of the newly-generated travel package.

After that, the itinerary comparing apparatus 10 proposes the newly-generated piece of travel package product information identified as 8-C and the advantages and the disadvantage to the user. Further, the itinerary comparing apparatus 10 proposes to the travel agent offering the piece of travel package product information identified as 8-B that it will be possible to improve the ratio of attracting customers by changing the piece of travel package product information identified as 8-B to the piece of travel package product information identified as 8-C. For example, the itinerary comparing apparatus 10 transmits the piece of travel package product information identified as 8-C to the travel agent by E-mail, via a webpage, by facsimile, or the like.

### Changing free time and adding a new sightseeing spot

Next, an example will be explained in which, when the user preference itinerary is compared with a piece of travel package product information, a proposal is made to the user and to one or more travel agents to change the activity during the free time in the piece of travel package product information and to also add a new sightseeing spot that is not included in the user preference itinerary.

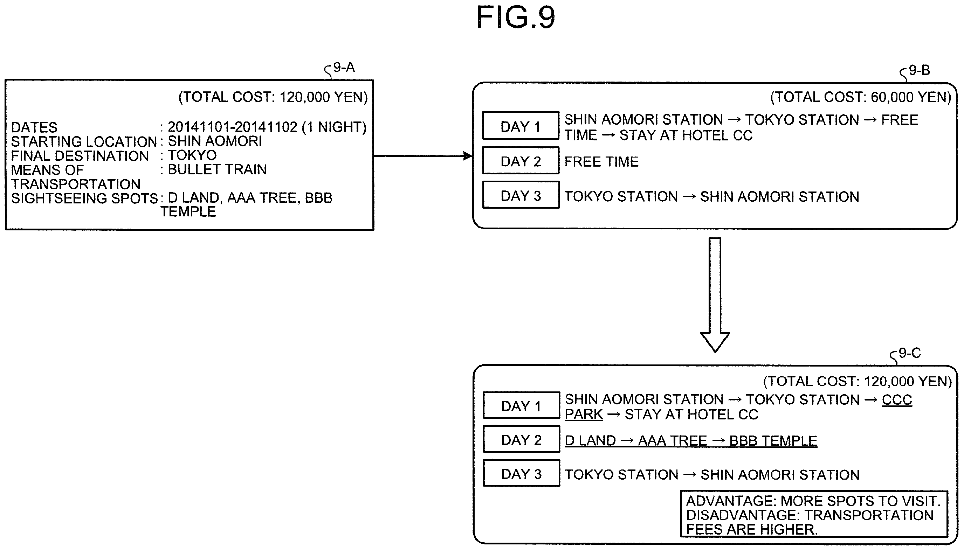

FIG. 9 is a drawing for explaining a fourth example of proposed travel plans. As illustrated in FIG. 9, the itinerary comparing apparatus 10 receives, as a user preference itinerary of which the total cost is 120,000 Yen, "Travel dates: 20141101-20141102 (one night); Starting location: Shin Aomori; Final destination: Tokyo; Means of transportation: the bullet train; Sightseeing spots: D Land, AAA Tree, and BBB Temple" (see 9-A in FIG. 9).

After that, the itinerary comparing apparatus 10 searches for travel package product information by determining the priority information to be "the starting location and the final destination" and detects the piece of travel package product information identified as 9-B in FIG. 9.

The piece of travel package product information identified as 9-B represents a travel plan of which the total cost is 60,000 Yen. On Day 1, the traveler is scheduled to travel from Shin Aomori Station to Tokyo Station, to have free time, and to subsequently stay at Hotel CC. On Day 2, the traveler is scheduled to have free time. On Day 3, the traveler is scheduled to leave from Tokyo Station to return to Shin Aomori Station.

The itinerary comparing apparatus 10 compares the piece of travel package product information with the user preference itinerary and determines that the itinerary will be similar to the user preference itinerary received from the user when the traveler is scheduled to visit the sightseeing spots desired by the user during the free time on Day 2. Further, the itinerary comparing apparatus 10 determines that it is also possible to incorporate CCC park, which is one of the popular sightseeing spots in Tokyo, into the free time on Day 1. The itinerary comparing apparatus 10 determines that, in the situation with these arrangements, although it will be possible to visit all the desired sightseeing spots as well as the additional sightseeing spot, the cost is higher.

As a result, the itinerary comparing apparatus 10 replaces the free time on Day 1 in the piece of travel package product information identified as 9-B with CCC park, and also generates a travel plan (9-C in FIG. 9) obtained by replacing the free time on Day 2 with D Land, AAA Tree, and BBB Temple. Further, the itinerary comparing apparatus 10 generates information indicating that "it is possible to visit more sightseeing spots with a small increase in the cost" as an advantage and information indicating that "the cost is higher (by 20,000 Yen)" as a disadvantage, of the newly-generated travel package.

After that, the itinerary comparing apparatus 10 proposes the newly-generated piece of travel package product information identified as 9-C and the advantage and the disadvantage to the user. In addition, the itinerary comparing apparatus 10 proposes to the travel agent offering the piece of travel package product information identified as 9-B that it is possible to improve the ratio of attracting customers by changing the piece of travel package product information identified as 9-B to the piece of travel package product information identified as 9-C.

### Combining mutually-different travel plans

Next, an example will be explained in which a new piece of travel package product information is generated by combining together a plurality of pieces of travel package product information offered by mutually-different travel agents or mutually the same travel agent, so as to propose the new piece of travel package product information to the user and to one or more travel agents.

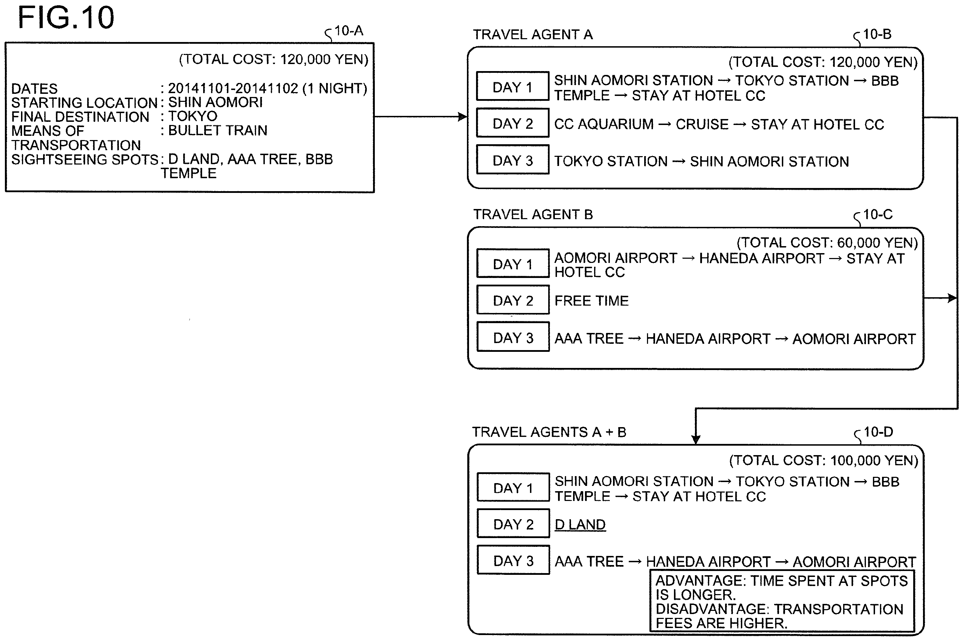

FIG. 10 is a drawing for explaining a fifth example of proposed travel plans. As illustrated in FIG. 10, the itinerary comparing apparatus 10 receives, as a user preference itinerary of which the total cost is 120,000 Yen, "Travel dates: 20141101-20141102 (one night); Starting location: Shin Aomori; Final destination: Tokyo; Means of transportation: the bullet train; Sightseeing spots: D Land, AAA Tree, and BBB Temple" (see 10-A in FIG. 10).

After that, the itinerary comparing apparatus 10 searches for travel package product information by determining the priority information to be "an itinerary including the starting location, the final destination, and any one of the sightseeing spots" and detects the piece of travel package product information identified as 10-B and the piece of travel package product information identified as 10-C in FIG. 10.

The piece of travel package product information identified as 10-B represents a travel plan which is offered by the travel agent A and of which the total cost is 120,000 Yen. On Day 1, the traveler is scheduled to travel from Shin Aomori Station to Tokyo Station, to visit Temple BBB, and to subsequently stay at Hotel CC. On Day 2, the traveler is scheduled to visit CC Aquarium, to subsequently have a cruise, and to stay at Hotel CC. On Day 3, the traveler is scheduled to leave from Tokyo Station to return to Shin Aomori Station.

The piece of travel package product information identified as 10-C represents a travel plan which is offered by the travel agent B and of which the total cost is 60,000 Yen. On Day 1, the traveler is scheduled to travel from Aomori Airport to Haneda Airport and to stay at Hotel CC. On Day 2, the traveler has free time. On Day 3, the traveler is scheduled to visit AAA Tree and to subsequently leave from Haneda Airport to return to Aomori Airport.

The itinerary comparing apparatus 10 compares these pieces of travel package product information with the user preference itinerary. Further, the itinerary comparing apparatus 10 determines that the itinerary will be similar to the travel plan desired by the user when Day 1 of 10-B and Day 3 of 10-C are adopted, and also, the traveler is scheduled to visit D Land during the free time on Day 2 of 10-C. Further, the itinerary comparing apparatus 10 determines that, in that situation, although it will be possible to visit all the desired sightseeing spots, there is a high possibility that the cost may increase because the primary transportation on the return trip is changed from the bullet train to the airplane.

As a result, the itinerary comparing apparatus 10 generates a travel plan (10-D in FIG. 10) obtained by combining Day 1 of 10-B with Day 3 of 10-C and replacing the free time on Day 2 of 10-B with D Land. Further, the itinerary comparing apparatus 10 generates information indicating that "it is possible to visit all the sightseeing spots while keeping the cost low" as an advantage and information indicating that "there is a high possibility that the cost may increase" as a disadvantage, of the newly-generated travel package.

After that, the itinerary comparing apparatus 10 proposes the newly-generated piece of travel package product information identified as 10-D and the advantage and the disadvantage to the user. Further, the itinerary comparing apparatus 10 proposes the piece of travel package product information identified as 10-D to the travel agent A offering the piece of travel package product information identified as 10-B and to the travel agent B offering the piece of travel package product information identified as 10-C.

Because the piece of travel package product information identified as 10-D is obtained by the itinerary comparing apparatus 10 by combining together the arbitrary pieces of travel package product information, it is expected that, in many situations, the cost can only be calculated as an approximate value. Accordingly, the itinerary comparing apparatus 10 may propose the piece of travel package product information with a certain range of cost such as 100,000 Yen or higher or may estimate the cost to be equal to or higher than the costs of the pieces of travel package product information that were combined together.

As explained above, the itinerary comparing apparatus 10 is able to propose a travel plan desired by the user, even when there is no piece of travel package product information similar to the user preference itinerary generated by the user. Further, the itinerary comparing apparatus 10 is also able to propose the advantages and the disadvantages, together with the proposed travel plans. It is therefore possible to provide the user with the information to consider and to improve the ratio of attracting customers.

Further, the itinerary comparing apparatus 10 displays, for the user, the user preference itinerary and the travel package product information in a comparable manner. Accordingly, the user is able to easily recognize the comparison result. In addition, the itinerary comparing apparatus 10 is able to generate the new piece of travel package product information similar to the travel plan desired by the user and to propose the generated information to the travel agents. Accordingly, the travel agents are able to utilize the proposed plans for considering a new piece of travel package product information, or the like. As a result, the travel agents are able to discover latent customers.

Further, because the comparison result is provided by the itinerary comparing apparatus 10, the user is able to design a satisfactory travel plan without the need to manually compare the travel plans. Further, also to users who have no plans to use a tour or a travel package, it is possible to promote the tours and the travel packages, so as to have the tours and the travel packages exposed and to achieve advertisement effects.

### Second Embodiment

Exemplary embodiments of the present invention have thus been explained. The present invention, however, may be carried out in other various forms besides those described in the exemplary embodiments above.

### The position information and the transportation information

In the embodiments described above, the example is explained in which the itinerary comparing apparatus 10 obtains the position information of the information such as the sightseeing spots and the means of transportation between the sightseeing spots and the like, from the external servers. However, possible embodiments are not limited to this example. For instance, the itinerary comparing apparatus 10 may obtain the pertinent information from an external database storing therein the position information, the means of transportation, the transportation information, the distances, and the like.

Further, the itinerary comparing apparatus 10 may have installed therein the functions that are the same as those of the external servers described above. Also, the itinerary comparing apparatus 10 may store a database in the storage unit 12, the database storing therein information obtained from the external servers in advance and information input by an administrator.

### The insertion into the free time

Further, the itinerary comparing apparatus 10 is also capable of determining a spot to be visited during free time, on the basis of the distance from the spot to be visited before the free time and the distance to the spot to be visited after the free time. For example, when selecting a new sightseeing spot to be inserted into the free time, the itinerary comparing apparatus 10 may select the sightseeing spot by prioritizing such a sightseeing spot of which the traveling time periods from and to the sightseeing spots before and after the free time are within a predetermined length. Alternatively, the itinerary comparing apparatus 10 may select the sightseeing spot by prioritizing such a sightseeing spot that is positioned on the travel path between the sightseeing spots before and after the free time. With any of these arrangements, the itinerary comparing apparatus 10 is able to insert the new sightseeing spot into the travel plan without causing difficulties.

### Setting priority items when searching for travel packages

For example, when searching for travel package product information, the itinerary comparing apparatus 10 is able to arbitrarily configure a setting as to which items in the user preference itinerary is to be prioritized. For example, the itinerary comparing apparatus 10 is also able to set a starting location, a final destination, and an accommodation facility as priority items, so as to perform the comparing process and the replacing process on one or more pieces of travel package product information in which these items match. Further, when the user designates a budget, the itinerary comparing apparatus 10 is also able to perform the comparing process and the replacing process on one or more pieces of travel package product information that fall in the budget range.

Further, the itinerary comparing apparatus 10 performs the comparing process and the replacing process on a piece of travel package product information in which the starting location and the final destination match those in the user preference itinerary. Further, the itinerary comparing apparatus 10 is also able to display comparison results in such a manner that a comparison result of a piece of travel package product information including the same accommodation facility as the one in the user preference itinerary and/or a comparison result of a piece of travel package product information including an accommodation facility on the same level as the one in the user preference itinerary are displayed in higher ranking positions with a higher priority. Further, the itinerary comparing apparatus 10 is also able to make a comparison with a piece of travel package product information including a hotel located in an optimal position when the traveling to and from the hotel is taken into consideration.

### A system

As for the configurations of the apparatuses illustrated in the drawings, it is not always to physically configure the apparatuses as illustrated in the drawings. In other words, it is acceptable to configure any of the apparatuses so as to be distributed or integrated in arbitrary units. Further, all or an arbitrary part of the processing functions performed by the apparatuses may be realized by a Central Processing Unit (CPU) and a computer program analyzed and executed by the CPU or may be realized as hardware using wired logic.

With regard to the processes explained in the present embodiments, it is acceptable to manually perform all or a part of the processes described as being performed automatically. Conversely, by using a method that is publicly known, it is also acceptable to automatically perform all or a part of the processes described as being performed manually. Further, unless noted otherwise, it is acceptable to arbitrarily modify any of the processing procedures, the controlling procedures, specific names, and various information including various types of data and parameters that are presented in the above text and the drawings.

### Hardware

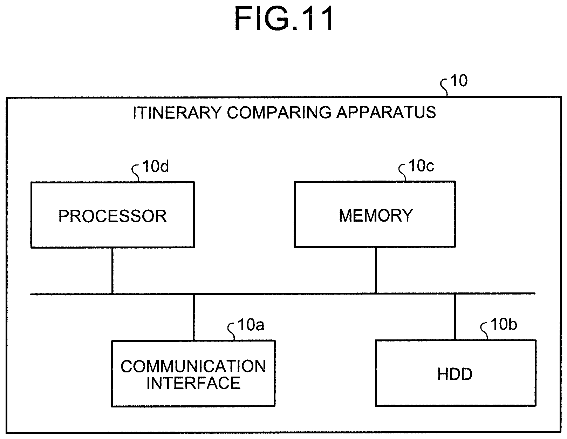

FIG. 11 is a diagram for explaining an exemplary hardware configuration. As illustrated in FIG. 11, the itinerary comparing apparatus 10 includes a communication interface 10a, a Hard Disk Drive (HDD) 10b, a memory 10c, and a processor 10d. Further, the functional units illustrated in FIG. 11 are connected to each other by a bus or the like.

The communication interface 10a is an interface that controls communication with another apparatus and may be configured by using a network interface card, for example. The HDD 10b stores therein a computer program (hereinafter, "program"), a database (DB), a table, and/or the like to bring the functions illustrated in FIG. 2 and the like into operation.

The processor 10d brings a process into operation, the process performing the functions explained with reference to FIG. 2 and the like, by reading a program that executes the same processes as those of the processing units illustrated in FIG. 2 and the like from the HDD 10b or the like and loading the read program into the memory 10c.

In other words, this process executes the same functions as those of the processing units included in the itinerary comparing apparatus 10. More specifically, the processor 10d reads, from the HDD 10b or the like, the program having the same functions as those of the receiving unit 14, the information extracting unit 15, the package searching unit 16, the comparing and changing unit 17, the providing unit 18, and the like. After that, the processor 10d executes the process that performs the same processes as those performed by the receiving unit 14, the information extracting unit 15, the package searching unit 16, the comparing and changing unit 17, and the providing unit 18.

In this manner, the itinerary comparing apparatus 10 operates as an information processing apparatus that implements the itinerary determining method by reading and executing the program. Further, the itinerary comparing apparatus 10 is also capable of realizing the same functions as those described in the embodiments above, by reading the program from a recording medium while using a medium reading device and executing the read program. The program explained in this additional embodiment does not always have to be executed by the itinerary comparing apparatus 10. For instance, the present invention is similarly applicable to a situation where another computer or a server executes the program and to a situation where the program is executed by a collaboration of another computer and a server.

### [Reference Signs List]

- 10: ITINERARY COMPARING APPARATUS

- 11: COMMUNICATING UNIT
- 12: STORAGE UNIT
- 12a: TRAVEL PACKAGE DB
- 13: CONTROLLING UNIT
- 14: RECEIVING UNIT
- 15: INFORMATION EXTRACTING UNIT
- 16: PACKAGE SEARCHING UNIT
- 17: COMPARING AND CHANGING UNIT
- 18: PROVIDING UNIT

## Claims

1. An itinerary determining method comprising:
receiving a designation of a plurality of sightseeing spots;
extracting a piece of travel package product information including the received plurality of sightseeing spots as destinations, by referring to an itinerary storage unit storing therein a plurality of pieces of travel package product information; and
presenting the extracted piece of travel package product information.

2. The itinerary determining method according to claim 1, wherein
the presenting includes:
presenting a price of the extracted piece of travel package product information; and
presenting a cost corresponding to an itinerary to visit the plurality of sightseeing spots, the cost being calculated on a basis of information stored in a storage unit storing therein transportation fee information and accommodation fee information.

3. The itinerary determining method according to claim 1, wherein
the presenting includes displaying in a comparable manner:
presenting an itinerary and a price corresponding to the extracted piece of travel package product information; and
presenting an itinerary to visit the plurality of sightseeing spots and a cost corresponding to the itinerary, the itinerary and the cost being calculated on a basis of information stored in a storage unit storing therein transportation fee information and accommodation fee information.

4. The itinerary determining method according to claim 3, wherein the presenting includes outputting an accommodation facility included in the extracted piece of travel package product information as a candidate.

5. The itinerary determining method according to claim 3, wherein an accommodation facility included in the itinerary to visit the plurality of sightseeing spots calculated on the basis of the information stored in the storage unit storing therein the transportation fee information and the accommodation fee information is arranged to match an accommodation facility included in the extracted piece of travel package product information.

6. The itinerary determining method according to claim 1, further comprising determining, when the extracted piece of travel package product information includes free time, whether or not it is possible to incorporate another designated sightseeing spot into the free time.

7. An itinerary determining method comprising:
receiving a designation of a plurality of sightseeing spots; and
presenting candidates for a piece of travel package product information each including, as destinations, sightseeing spots obtained by excluding one or more sightseeing spots from the received plurality of sightseeing spots and each also including free activity time into which it is possible to incorporate an itinerary to visit the one or more excluded sightseeing spots, by referring to an itinerary storage unit storing therein a plurality of pieces of travel package product information.

8. The itinerary determining method according to claim 7, wherein the presenting is performed when it is impossible to extract such a piece of travel package product information that includes all the received plurality of sightseeing spots as destinations.

9. The itinerary determining method according to claim 7, further comprising determining, when an extracted piece of travel package product information includes free time, whether or not it is possible to incorporate another designated sightseeing spot into the free time.

10. The itinerary determining method according to claim 9, further comprising specifying a spot to be visited during the free time is determined on a basis of a distance from a spot to be visited before the free time and a distance to a spot to be visited after the free time.

11. An itinerary determining computer program that causes a computer to execute a process comprising:
receiving a designation of a plurality of sightseeing spots;
extracting a piece of travel package product information including the received plurality of sightseeing spots as destinations, by referring to an itinerary storage unit storing therein a plurality of pieces of travel package product information; and
presenting the extracted piece of travel package product information.

12. An itinerary determining apparatus comprising:
a receiving unit that receives a designation of a plurality of sightseeing spots;
an extracting unit that extracts a piece of travel package product information including the received plurality of sightseeing spots as destinations, by referring to an itinerary storage unit storing therein a plurality of pieces of travel package product information; and
a presenting unit that presents the extracted piece of travel package product information.

13. An itinerary determining computer program that causes a computer to execute a process comprising:
receiving a designation of a plurality of sightseeing spots; and
presenting candidates for a piece of travel package product information each including, as destinations, sightseeing spots obtained by excluding one or more sightseeing spots from the received plurality of sightseeing spots and each also including free activity time into which it is possible to incorporate an itinerary to visit the one or more excluded sightseeing spots, by referring to an itinerary storage unit storing therein a plurality of pieces of travel package product information.

14. An itinerary determining apparatus comprising:
a receiving unit that receives a designation of a plurality of sightseeing spots; and
a presenting unit that presents candidates for a piece of travel package product information each including, as destinations, sightseeing spots obtained by excluding one or more sightseeing spots from the received plurality of sightseeing spots and each also including free activity time into which it is possible to incorporate an itinerary to visit the one or more excluded sightseeing spots, by referring to an itinerary storage unit storing therein a plurality of pieces of travel package product information.
